# EUROPEAN PATENT SPECIFICATION

(11) **EP 0 499 285 B1**
(45) Date of publication and mention of the grant of the patent: **14.08.1996**
(21) Application number: 92102538.3
(22) Date of filing: 14.02.1992
(51) Int. Cl.: A01F 15/07

(54) **Apparatus for wrapping a fodder bale with plastics**
Vorrichtung um Futterballen mit Plastik zu umwickeln
Appareil pour envelopper des balles de fourage avec du plastic

(30) Priority: 14.02.1991 FI 910733
(43) Date of publication of application: 19.08.1992
(73) Proprietor: NHK-KESKUS OY, 13110 Hämeenlinna (FI)
(72) Inventor: Tikkanen, Timo, F-12400 Tervakoski (FI)
(74) Representative: Zipse + Habersack

(56) References cited:
- EP-A- 0 336 739
- EP-A- 0 362 754
- EP-A- 0 394 011
- WO-A-90/13995
- US-A- 3 877 595

## Description

The present invention relates to an apparatus for wrapping a bale of hay or straw, such as a fodder bale, with plastics, in accordance with the preamble of claim 1.

In prior art, cylindrical straw feed bales have been wrapped with plastics e.g. by means of a wrapping machine fitted to the hitch system of a tractor.

WO 90/13995 describes a bale wrapper apparatus in accordance with the preamble of claim 1, where the pick-up mechanism comprises a pair of laterally spaced arms which can embrace the end faces of the bale lying on the ground. Both arms can be pivoted inwardly about respective substantial vertical axes by a suitable power means, such as a ram, in order to engage and grip the respective bale end face. The arms of the pick-up mechanism form part of a bale support cradle which can move between a first position suitable for engaging and gripping a bale lying on the ground, and a second position in which the gripped bale can be transferred onto the turntable. The cradle which forms the pick-up mechanism is pivotally adjusted for movement through an arc of movement about a substantially horizontal pivot axis. This double pivotal movement of the grip arm implies a costly construction.

Another previously known procedure for the wrapping of bales with plastic is to use a side-loading wrapping machine pulled by a tractor and provided with a lifting mechanism, by means of which the bales are lifted onto the wrapping table from the side of the machine. A drawback with this procedure is the heavy construction of the machine, because lifting the bales from one side requires counterweights on the opposite side of the machine. In addition to being expensive, the heavy construction involves the drawback of causing compaction of the surface soil of the fields.

Yet another previously procedure known from EP-A-0 394 011, for the wrapping of bales with plastic is to use a trailable wrapping machine provided with an inclinable wrapping table and a grasper arm which grips the bale from above. In this procedure, the tractor moves the wrapping machine towards a bale on the ground by reversing, the wrapping table is turned into an inclined position and the grasping arm is extended far enough to ensure that it will reach across the bale while the tractor is reversing. When the inclined table hits the bale, the grasping arm is lowered and the bale is squeezed between the table and the arm. Next, the table is turned to a horizontal position and the grasper arm is raised high enough to enable the bale to be wrapped with plastic either by means of a rotating table or a special wrapping boom provided above the table. The wrapped-up bale is dropped back onto the field or to a storage place by inclining the table. A drawback in this procedure is that it is very difficult to center the bale on the table. A further drawback is that the overhead grasper arm hinders the use of an overhead rotating mechanism for the wrapping operation, so the bales have to be wrapped primarily by means of a rotatable wrapping table. The rotatable table construction with its bearings and control system is heavy, complex and expensive. Another drawback is that the grasper arm is controlled by means of separate control elements, thus adding to the complexity, failure probability and price.

EP-A 0 362 754 describes a similar trailable wrapping machine provided with an inclinable wrapping table and a grasper arm. This grasper arm is extendable parallel above the ground and it pushes, when retracted, the bale onto the tilted wrapping table and holds it during turning the wrapping table from its tilted to a horizontal position. The wrapping operation is then carried out by means of an overhead rotating mechanism.

The object of the present invention is to eliminate the drawbacks of the above-mentioned machines and to provide a reliable, light and easy-to-use apparatus for the wrapping of bales with plastics. The apparatus is characterized by what is presented in the characterization part of claim 1. The advantages of the invention include small size and light weight of the apparatus, because no counterweights are needed. Furthermore, because of the light weight of the machine, a small tractor can be used to power it and bigger tractors can be used to better advantage in other jobs. A further advantage is the simplicity of use, because the the picking-up, wrapping and removal of the bales from the wrapping machine can be effected by means of a single operating lever. A further advantage worth mentioning is the multi-function capability of the machine, because by using a few accessories the same basic machine can be converted into a side-driven type or hitched directly to a baler, in which case no separate powering means is needed.

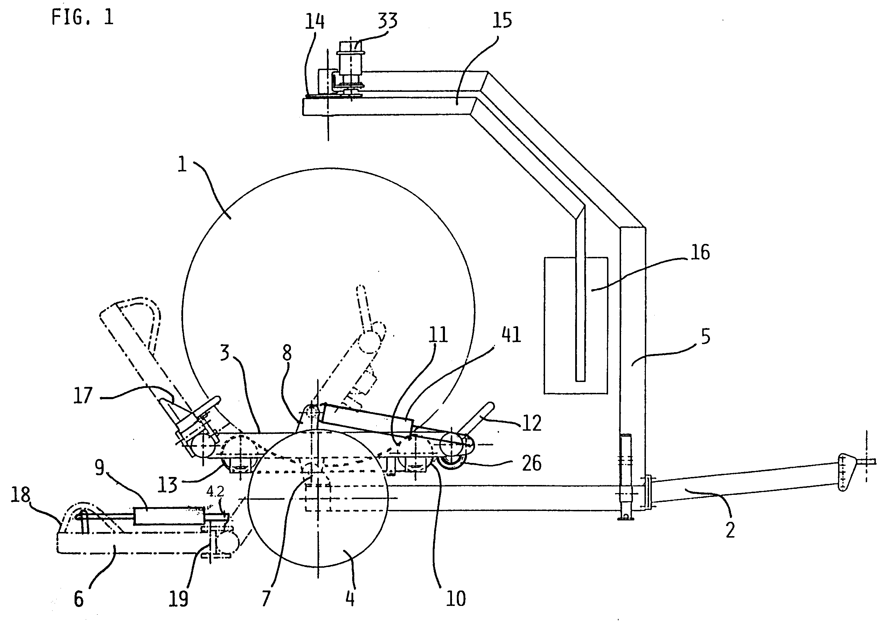

In the following, the invention is described in detail by the aid of an example by referring to the accompanying drawings, in which
- Fig. 1: presents the wrapping machine in lateral view

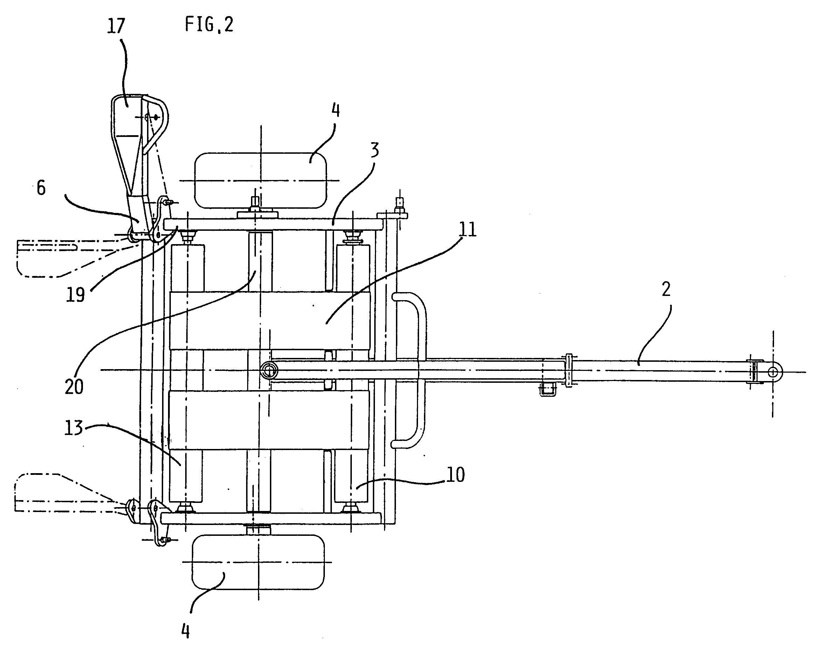

- Fig. 2: presents the wrapping machine in top view

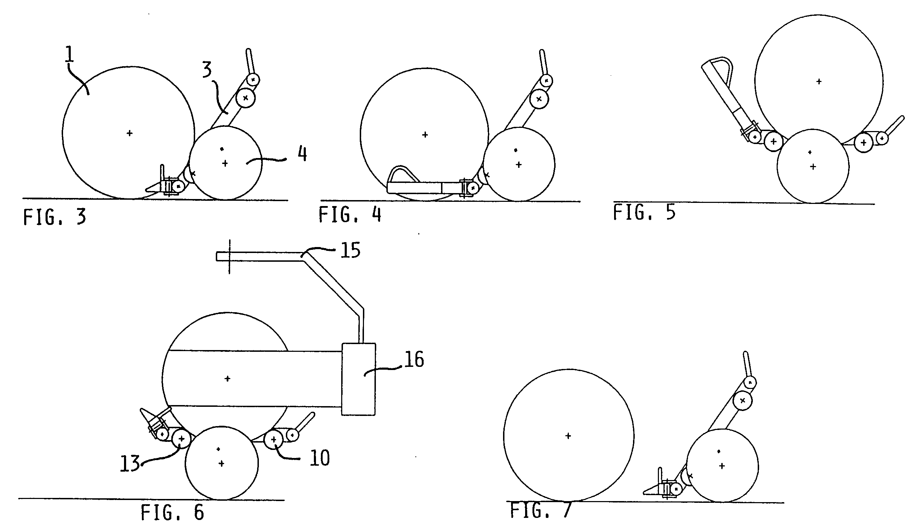

- Fig. 3-7: present various phases of the picking-up, wrapping and removal of bales in lateral view
- Fig. 8: presents a diagram of the hydraulic circuits of the wrapping machine.

To make it easier to understand the procedure, the apparatus of the invention is described first. The basic part of the frame of the apparatus consists of an essentially horizontal draw beam 2 designed for connection to a tractor. Attached to the rear end of the draw beam is a horizontal shaft 20 placed at right angles relative to the draw beam and provided at each end with a wheel 4 rotatably mounted on the shaft. Mounted at a point between the shaft and that end of the draw beam which is linked to the tractor is an overhead supporting arm 5 which rises upwards from the beam and is bent backwards in its upper portion. The supporting arm carries a wrapping arm 15 rotatably mounted at its rear end. The wrapping arm 15 is bent downwards essentially in the same shape with the overhead supporting arm, in a way enabling the wrapping arm to turn horizontally about its vertical joint without touching the overhead supporting arm. The wrapping arm is rotated by a hydraulic motor 33 mounted on the supporting arm. The power transmission is implemented e.g. by using a chain 14 and sprockets. The wrapping arm supports a roll 16 of plastic placed in a vertical position at its lower end. The roll is gyrated around the fodder bale 1 to be wrapped.

The shaft 20 is provided with lugs 7 placed close to the wheel 4 at each end of the shaft. The wrapping table 3 is pivoted in the lugs by means of horizontal links so that it can be tilted backwards to a suitable position to allow a bale to be picked up or removed. The tilting is implemented using a hydraulic power means 41, one end of which is linked to the wrapping table while the other end is linked to a lug 8 attached to the shaft between the wheels. The wrapping table 3 is of rectangular form, consisting of two side beams and two end beams. The table is linked to the shaft 20 by links placed in the side beams. The machine has two horizontal rotating rollers 10 and 13 linked to the side beams by bearings placed at the ends of the rollers, which are at right angles to the side beams. In addition, the machine is provided with at least one belt 11 stretched around the rotating rollers so that when a bale of hay or the like is on the belt and the driving roller 10 is rotated, the free roller 13 will rotate due to belt friction. At the same time, the belt forms a concave pocket in which the fodder bale remains well in place during the wrapping operation. The driving roller 10 receives its rotating energy from a hydraulic motor 26 mounted on the wrapping table. The front edge of the table is provided with a guard 12 designed to prevent the bale from falling off the table.

The machine is provided with picking devices 6, pivotably mounted on each rear corner of the wrapping table by means of a joint 19 in an angular plane fixed with respect to the wrapping table. The position of the joint 19 is so selected that, when the table 3 is inclined to its extreme position to remove or pick up a bale, the joint is in an essentially vertical position, so that the picking device turning about the joint 19 is near the ground, rotating in an essentially horizontal plane, i.e. in practice parallel to the ground surface. This arrangement makes it possible for the machine to handle bales of different diameters. The turning movement of the picking devices is produced by means of hydraulic power means 9, which are attached via joints to the picking devices 6 by one end and by the other end to lugs 42 attached to the table 3. In their position of readiness, the picking devices are turned to their outer position so that their free ends are as far apart as possible. The picking devices turn from each side of the bale to its back and lower part.

The front edge of the free end of the picking device is provided with a bevel surface 17 to permit an effective bale-picking motion despite the softness of the edges of the bale rolls. This allows the picking device to advance some distance into the soft edge of the bale roll, yet without damaging the roll. In addition, the rear edge of the free end of the picking device is provided with a stopper 18 serving to prevent the picking device from advancing too far into the bale.

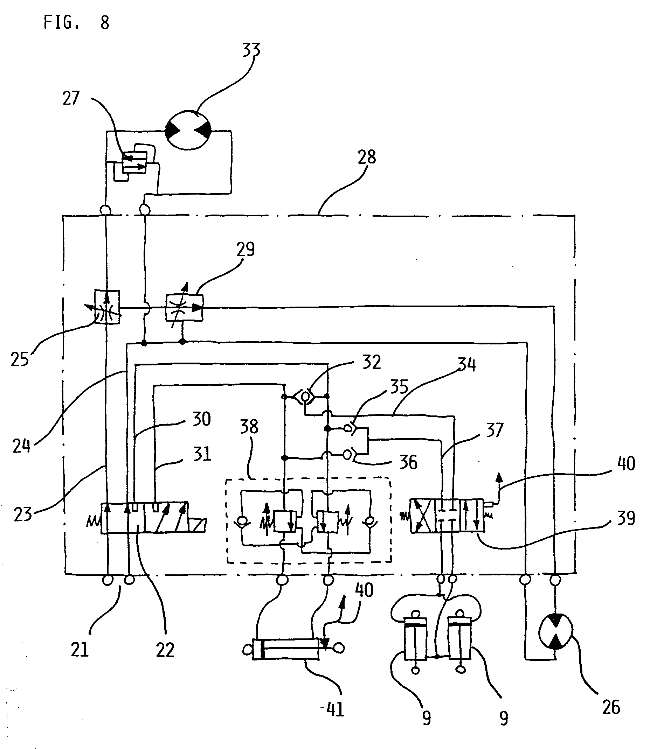

Fig. 8 presents a simplified diagram of the hydraulic system of the machine of the invention. The operator of the wrapping machine can produce all the necessary functions from the driver's seat of the tractor by means of a single operating lever and an electric switch. The wrapping machine is provided with a hydraulic unit 28 comprising an electric valve 22, pressure compensated quantity control valves 25 and 29, check valves 32, 35 and 36, a load lowering valve 38 and a direction valve 39, said valves being interconnected by hydraulic channels. Connected as power units to the hydraulic unit 28 are a hydraulic motor 33 rotating the wrapping arm 15, a hydraulic motor 26 rotating the driving roller 10, a hydraulic cylinder 41 used to incline the table 3, and hydraulic cylinders 9 producing the back-and-forth turning movement of the picking devices.

The hydraulic unit 28 is connected to the tractor's power output by connectors 21. The pressure and return channels alternate in the connectors 21 according to the position of the hydraulic operating lever provided on the tractor. The electric valve 22 serves to distribute the energy obtained from the tractor to the hydraulic motors 26 and 33 needed for the wrapping of the bales and to the hydraulic cylinders 9 and 41 needed for the lifting and lowering of the bales.

After the tractor driver has brought the wrapping machine to a suitable position in front of the bale and starts lifting it, the electricity is switched off with the electric switch, and the tractor's power output is connected to channels 30 and 31 as determined by the position of the electric valve. The pressure channel is now channel 31, through which the hydraulic oil flows to the load lowering valve 38 and from its secondary side further to the pressure side of the table inclining cylinder 41, i.e. to the backside of the piston. The pressure pushes the cylinder rod outwards from the cylinder, and consequently the table is turned back to its horizontal position, with the bale held on the table by the aid of the picking devices 6, now turned to their inner position. From the rod side of the cylinder, the oil correspondingly flows back to the load lowering valve, which lets the oil pass through it in an even flow into the return channel 30. The load lowering valve 38 enables smooth table motion and keeps the table in the position where it has been left. After the rod of the cylinder 41 has been pushed out completely, a mechanical link 40 attached to the cylinder rod turns the direction valve 39 from the non-conducting middle position to the conducting position, so that the oil flowing in the pressure channel 31 can flow through check valve 32 into channel 34, and further through the direction valve 39 into the rod spaces of the cylinders 9 of the picking devices. The cylinder rods are now retracted and the picking devices turn outwards to their position of readiness so as to be out of the way during the wrapping operation. From the pressure side of the cylinders 9, the oil flows correspondingly via the direction valve 39 into channel 37, from where it flows further via check valve 35 into the return channel 30 and back into the oil container. At this stage, the oil returning from the pressure side of the cylinders 9 cannot flow via check valves 32 and 36 into the pressure channel 31, because the pressure in this channel is higher. The apparatus is now ready to start the wrapping operation.

After the tractor driver has turned on the electric power by operating the electric switch, the electric valve is connected so as to direct the hydraulic oil into channels 23 and 24, of which, in the situation illustrated in Fig. 8, channel 23 is the pressure channel and channel 24 is the return channel, through which the oil returns to the container. In channel 23 there is a quantity control valve 25 through which a desired portion of the oil is passed, and this oil flows further into the hydraulic motor 33 of the wrapping arm. From the secondary side of this motor, the oil returns to the container via channel 24. Connected to the hydraulic circuit of the motor is a safety valve 27 which passes the oil through it in the event of the motion of the wrapping arm being stopped for an external reason, for instance if the arm hits an obstacle, e.g. a human being. That portion of the oil which is not passed through quantity control valve 25 into hydraulic motor 33 flows into another quantity control valve 29, through which again a desired portion of the oil flows further into the hydraulic motor 26 rotating the driving roller 10 used to produce the motion rotating the bale. From the secondary side of this motor, the oil returns to the container via channel 24. That portion of the oil which is not needed in either one of the hydraulic motors is branched off in quantity control valve 29 and returns direcly to the container via channel 24.

After the bale has been wrapped, it can be removed from the wrapping table by inclining the table by means of cylinder 41. To do this, the tractor driver operates the electric switch to turn off the electric power, thereby causing the tractor's power output to be connected to the channels 30 and 31 controlling the hydraulic cylinders. To lower the bale, the tractor driver turns the hydraulic operating lever to the opposite position as compared to the lifting operation, thus letting the operating pressure into channel 30 and further via load lowering valve 38 into the rod space of the table inclining cylinder 41, causing the rod to be retracted. At the same time, the return oil is discharged from the piston space of the cylinder via the load lowering cylinder into the return channel 31 and further into the container. At the start of the lowering operation, the pressurized oil is also allowed to flow via check valve 32 and channel 34 into direction valve 39 and through it further into the rod space of the hydraulic cylinders 9 of the picking devices. This ensures that the picking devices are in the open position during the lowering stage. Once the rod of hydraulic cylinder 41 has moved inwards through a certain distance, the mechanical link 40 causes the direction valve 39 to return to its middle position and the picking devices 6 are locked in the open position. The table 3 is tilted and the bale rolls off the table.

After this, the machine is moved to a new bale while the table remains tilted. The inclining action goes on until the rod of the hydraulic cylinder 41 reaches its inner position. The mechanical link 40 now causes the direction valve 39 to assume a position in which the pressure channels 34 and 37 are crossed in the direction valve. As a consequence, the oil in channel 34, in which the pressure is higher, flows into the piston space of the hydraulic cylinders 9 of the picking devices, thus causing the rods of these cylinders to protrude and the picking devices 6 to turn inwards. Now the picking devices first center and straighten the bale 1 and then grip it. Seeing that the bale has been successfully centered and gripped, the driver then turns the hydraulic operating lever to the other position, thus directing the hydraulic pressure into channel 31 and causing the table 3 to turn back to its horizontal position. At the same time, the picking devices remain locked in their inner position, holding the bale 1 steady on the table during the lifting.

Although the procedure of the invention has partly already been described in connection with the description of the diagram of the hydraulic system, the procedure is briefly described in the following. At the start of an operating cycle, the driver approaches the bale to be wrapped by backing the wrapping machine with the table so inclined that the table edge closest to the bale is down, close to the ground. Simultaneously, the picking devices remain in their open position, i.e. in the position of readiness. When the table touches the bale 1, the driver turns a hydraulic operating lever, whereupon the picking devices 6 turn into their inner position, thereby centering and straightening the bale relative to the wrapping table 3. At the end of the turning movement of the picking devices, the table automatically turns into its horizontal position, lifting the bale with it. Next, the picking devices also turn automatically to their open position, whereupon the driver operates an electric switch to connect electric power to an electric valve. As a consequence, the wrapping arm 15 of the machine and the bale rotating mechanism 10, 11, 13 and 26 are activated and a plastic sheet is wrapped around the bale while the latter is simultaneously rotated about its horizontal axis. When the driver thinks that the bale has enough plastic around it, he disconnects the supply of electricity to the electric valve and turns the hydraulic operating lever to a table inclining position. This causes the table 3 to tilt, whereupon the bale rolls off onto the ground. At this stage, the plastic sheet is also automatically cut off between the plastic roll 16 and the bale 1. The operating cycle starts anew and the driver moves the machine to the next bale.

It is obvious to a person skilled in the art that the invention is not restricted to the example described above, but that different embodiments of the invention may vary within the scope of the following claims. Thus the machine may have only one picking device 6 and the carriage is hitched to the tractor from its side. In this case, the bale to be picked up is approached by driving the tractor forwards, with the table tilted towards the bale. The arm of the picking device is provided with a centering element placed near the joint 19 at the front edge of the table. By means of the centering element, the bale is centered against a stop face provided in one of the front corners of the table, by turning the picking device from the side of the bale to its back and lower part. After this, the bale is lifted onto the table and the operation is carried on as described above.

## Claims

1. Apparatus for wrapping a bale of hay or straw, such as a fodder bale, with plastics, comprising an inclinable wrapping table (3) supported by horizontal links (7) on a frame part (2,20), a picking device (6) designed to pick up a bale and having at least one arm mounted by means of a joint (19) substantially close to a wrapping table corner the motion of the picking device about its joint (19) takes place in a substantially horizontal plane, as well as wrapping equipment (14-16, 33) by means of which plastic material is wrapped around the bale rotatably supported on the wrapping table,
characterized in
that the picking device (6) is pivotable in an angular plane fixed with respect to the wrapping table (3) and the position of the joint (19) is such that when the table (3) is inclined to its extreme position to remove or pick up a bale, the joint is in an essentially vertical position, so that the picking device turning about the joint (19) is near the ground.

2. Apparatus according to claim 1,
characterized in
that the picking device (6) is provided along its front edge with a bevel surface (17) to permit an effective bale-picking motion.

3. Apparatus according to claim 2,
characterized in
that the rear edge of the free end of the picking device (6) is provided with a stopper (18) serving to prevent the picking device from advancing too far into the bale.

4. Apparatus according to one of claims 1-3,
characterized in
that the front edge of the wrapping table (3) opposite to the picking device (6) is provided with a guard (12) designed to prevent the bale from falling off the table.

## Patentansprüche

1. Vorrichtung zum Umwickeln eines Heu- oder Strohballens, beispielsweise eines Futterballens, mit Plastik, wobei die Vorrichtung einen kippbaren Umwicklungstisch (3), der durch horizontale Verbindungen (7) auf einem Rahmenteil (2, 20) abgestützt ist, eine Aufhebevorrichtung (6) zum Aufheben eines Ballens, die mindestens einen Arm aufweist, der mittels eines Gelenks (19) im wesentlichen dicht an einer Ecke des Umwicklungstisches montiert ist, wobei die Bewegung der Aufhebevorrichtung um ihr Gelenk (19) in einer im wesentlichen horizontalen Ebene verläuft, wie auch eine Umwickelvorrichtung (14-16, 33) mit welcher das Plastikmaterial um den Ballen gewickelt wird, der drehbar auf dem Umwicklungstisch abgestützt ist, umfaßt,
dadurch gekennzeichnet,
daß die Aufhebevorrichtung (6) in einer gewinkelten Ebene in Bezug auf den Umwicklungstisch (3) schwenkbar ist und daß die Position des Gelenks (19) derart angeordnet ist, daß wenn der Tisch (3) in seine extreme Position geneigt ist, um einen Ballen zu entfernen oder ihn aufzuheben, sich das Gelenk in einer im wesentlichen vertikalen Position befindet, so daß die Aufhebevorrichtung, die sich um das Gelenk (19) dreht, sich nahe dem Boden befindet.

2. Vorrichtung nach Anspruch 1,
dadurch gekennzeichnet,
daß die Aufhebevorrichtung (6) entlang ihrer vorderen Kante mit einer abgeschrägten Oberfläche (17) versehen ist, um eine wirksame Ballenaufhebebewegung zu ermöglichen.

3. Vorrichtung nach Anspruch 2,
dadurch gekennzeichnet,
daß die hintere Kante des freien Endes der Aufhebevorrichtung (6) mit einem Anschlag (18) versehen ist, der verhindert, daß die Aufhebevorrichtung zu weit in den Ballen vordringt.

4. Vorrichtung nach einem der Ansprüche 1 - 3,
dadurch gekennzeichnet,
daß die vordere Kante des Umwicklungstisches (3), die der Aufhebevorrichtung (6) gegenüber liegt, mit einer Schutzvorrichtung (12) versehen ist, um zu verhindern, daß der Ballen vom Tisch fällt.

## Revendications

1. Appareil pour l'enveloppement d'une balle de foin ou de paille, telle qu'une balle de fourrage, avec un film de matière plastique, comprenant une table d'enveloppement inclinable (3) supportée par des liaisons horizontales (7) sur un châssis (2,20), un dispositif de ramassage (6) prévu pour ramasser une balle et comportant au moins un bras monté par l'intermédiaire d'un pivot (19) sensiblement près d'un angle de la table d'enveloppement de sorte que le mouvement du dispositif de ramassage autour de son pivot (19) s'effectue dans un plan sensiblement horizontal, ainsi qu'un équipement d'enveloppement (14-16,33) au moyen duquel la matière plastique est enroulée autour de la balle supportée de façon tournante sur la table d'enveloppement, caractérisé en ce que
le dispositif de ramassage (6) peut pivoter dans un plan angulaire fixe par rapport à la table d'enveloppement (3) et la position du pivot (19) est telle que, lorsque la table (3) est inclinée à sa position extrême pour évacuer ou ramasser une balle, le pivot se trouve dans une position sensiblement verticale et que le dispositif de ramassage qui tourne autour du pivot (19) est proche du sol.

2. Appareil suivant la revendication 1, caractérisé en ce que le dispositif de ramassage (6) comporte,le long de son bord avant, une surface biseautée (17) pour permettre un mouvement efficace de ramassage de la balle.

3. Appareil suivant la revendication 2, caractérisé en ce que le bord arrière de l'extrémité libre du dispositif de ramassage (6) comporte un élément d'arrêt (18) servant à empêcher le dispositif de ramassage de pénétrer trop loin dans la balle.

4. Appareil suivant une des revendications 1 à 3, caractérisé en ce que le bord avant de la table d'enveloppement (3), situé à l'opposé du dispositif de ramassage (6), comporte un élément de protection (12) servant à empêcher la balle de tomber de la table.
